# EUROPEAN PATENT SPECIFICATION

(11) **EP 0 960 680 B1**
(45) Date of publication and mention of the grant of the patent: **29.10.2003**
(21) Application number: 99109242.0
(22) Date of filing: 25.05.1999
(51) Int. Cl.: B23K 1/00

(54) **Method for manufacturing heads of pressed metal plate radiator elements**
Verfahren zum Herstellen von Köpfen von gedruckten metallischen Plattenheizelementen
Méthode de fabrication de têtes d'éléments compressés de radiateurs plats métalliques

(30) Priority: 28.05.1998 IT PD980135
(43) Date of publication of application: 01.12.1999
(73) Proprietor: Commital-Sami S.p.A., 36063 Marostica (Prov. of Vicenza) (IT)
(72) Inventor: Passuello, Flavio, 36064 Mason Vicentino(Prov.of Vicenza) (IT); Predebon Maurizio, 12080 Pianfei(Prov.of Cuneo) (IT)
(74) Representative: Modiano, Guido, Dr.-Ing.

(56) References cited:
- DE-A- 4 438 393
- DE-A- 19 548 236
- US-A- 5 295 302
- US-E- R E35 098

## Description

The present invention relates to a method for manufacturing heads of pressed metal plate radiator elements.

It is known that pressed metal plate radiators are constituted by a pack of side-by-side elements, in which each element is formed by two hollow heads connected by a plurality of pipes.

Each head is formed by two complementary half-shells which are joined at their respective edges.

Two methods are currently used to weld the half-shells that form the heads and to weld the heads to the connecting pipes: the first one uses a laser beam and the second one uses the discharge of a capacitor.

Other conventional welding methods using added material are not practiced in order to avoid subsequent machining to remove the welding bead, which is not acceptable for aesthetic reasons.

As regards laser welding, it can be performed only if the mated surfaces are perfectly flat; any fine cracks between the edges to be joined would be enlarged instead of being closed.

The process has also proved to be particularly slow and expensive.

EP-677354 is a prior art document as to capacitor discharge welding is concerned.

In practice, in order to perform welding by capacitor discharge so as to obtain a head, two electrodes are used; each electrode is hollowed out so as to define a seat which is shaped complementarily to each half-shell and the electrodes are then placed next to each other with the two half-shells inside them mated so that there is no contact between the electrodes but only through the edges of the half-shells.

The electrodes are then connected to a capacitor-discharge source which is activated.

The discharge generates heat between the edges, which accordingly melt locally and weld to each other hermetically.

Moreover, electrodes are used in the same manner as regards the welding of the pipes to the head: one pair retains the pipes and one pair retains the head.

The capacitor discharge is then released between the edges that join the pipes to the head, connecting the source to an electrode of each pair.

This welding method, performed in order to improve the structural qualities of the welds and to reduce manufacturing costs, suffers some drawbacks, the main one being constituted by the fact that the capacitor-discharge weld, in order to achieve perfect watertightness, must be performed in two separate steps.

The welding further requires the mating of two perfectly flat surfaces which cannot be obtained by simple pressing due to the elastic shrinkage induced in the metal plate; this makes it difficult to mate the two half-shells, which have a particularly large surface to be welded.

Moreover, the compression force cannot be excessive, in order to prevent the formation of welding burr which would require subsequent machining for removal.

The intense current involved can also lead to the perforation of the two half-shells, since the thickness of the metal plates is modest.

The aim of the present invention is to provide a method for manufacturing heads of pressed metal plate radiator elements which eliminates the above-mentioned drawbacks.

Within the scope of this aim, a consequent primary object is to provide a method which allows to achieve low production costs.

A further object of the invention is to provide a method which in any case allows a mutual joining of the elements which is of excellent quality and watertight.

A further object of the invention is to provide a method which avoids further machining for the removal of burr or welding beads.

A further object of the invention is to provide a method which does not affect in any way the overall structure of the finished product.

This aim, these objects and others which will become apparent hereinafter are achieved by a method for manufacturing heads of pressed metal plate radiator elements in which each head is formed by two complementary half-shells to be joined at their respective edges, characterized in that it comprises the steps of:
shaping said half-shells so that at least one of them has a plurality of tooth-like raised portions on its joining edge;
arranging said half-shells so that they are mated at said edges; welding said half-shells with a capacitor discharge, achieving a joint only at said raised portions;
welding the remaining parts of the mutually facing edges of said half-shells by braze welding.

Advantageously, braze welding is performed by applying a braze welding paste to the outside of the edges to be welded and by passing the head through an oven.

Further characteristics and advantages of the invention will become apparent from the following detailed description of the method, illustrated by way of non-limitative example in the accompanying drawings, wherein:

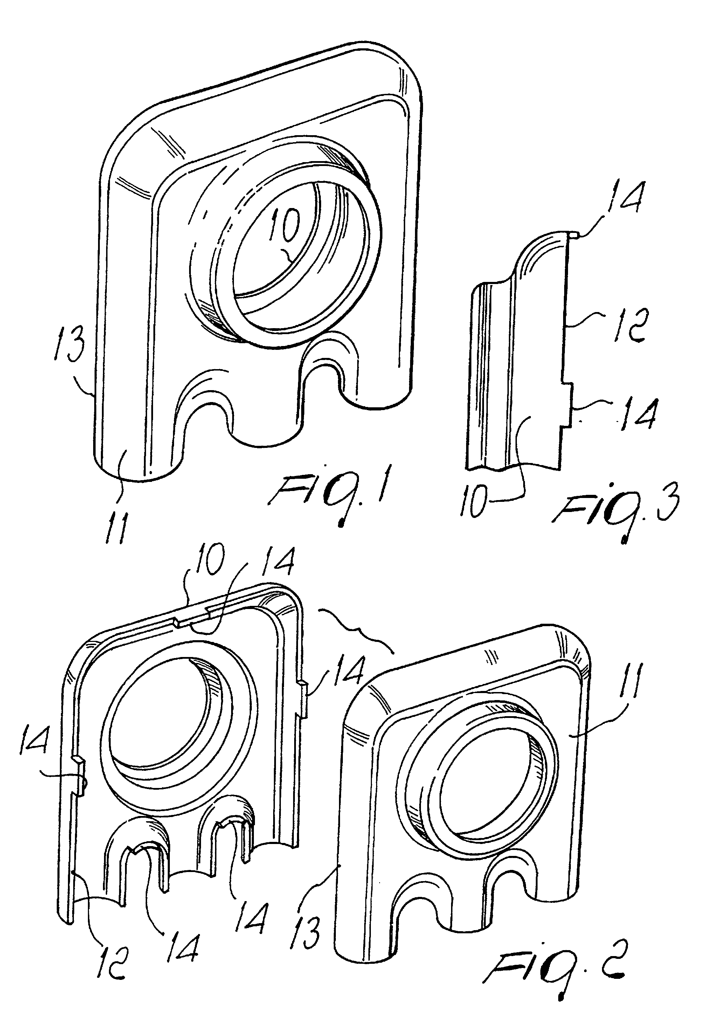

Figure 1 is a perspective view of a head for a radiator element before welding its components;
Figure 2 is a perspective exploded view of the head of Figure 1;
Figure 3 is an enlarged-scale side view of a detail of one of the two half-shells of the head of Figure 1;
Figure 4 is a perspective exploded view of a step which precedes capacitor-discharge welding, according to the invention;
Figure 5 is a sectional view of a detail of a region of the head welded by capacitor discharge;
Figure 6 is a sectional view of a detail of a braze welded region of the head;
Figure 7 is a perspective view of the finished product according to the invention.

With reference to the above figures, a method according to the invention for manufacturing heads of pressed steel radiator elements consists of a first step during which two complementary half-shells 10 and 11, to be joined at respective edges 12 and 13, are shaped by pressing.

The shaping must be such that at least one of said half-shells 10 and 11, particularly the first one in this case, has on the edge 12 a plurality of tooth-shaped raised portions 14 which are mutually spaced and formed during pressing.

Preferably, for normal head dimensions, the height of each raised portion is for example on the order of 0.2-0.3 millimeters and the length is on the order of 10 millimeters.

The raised portions 14 are provided in a number which is sufficient to allow stable resting of the half-shells 10 and 11 against each other when the edges 12 and 13 are parallel.

The number of raised portions 14 is of course also a function of the number of pipes that branch from the radiator head being manufactured (generally two, three, four, five or six).

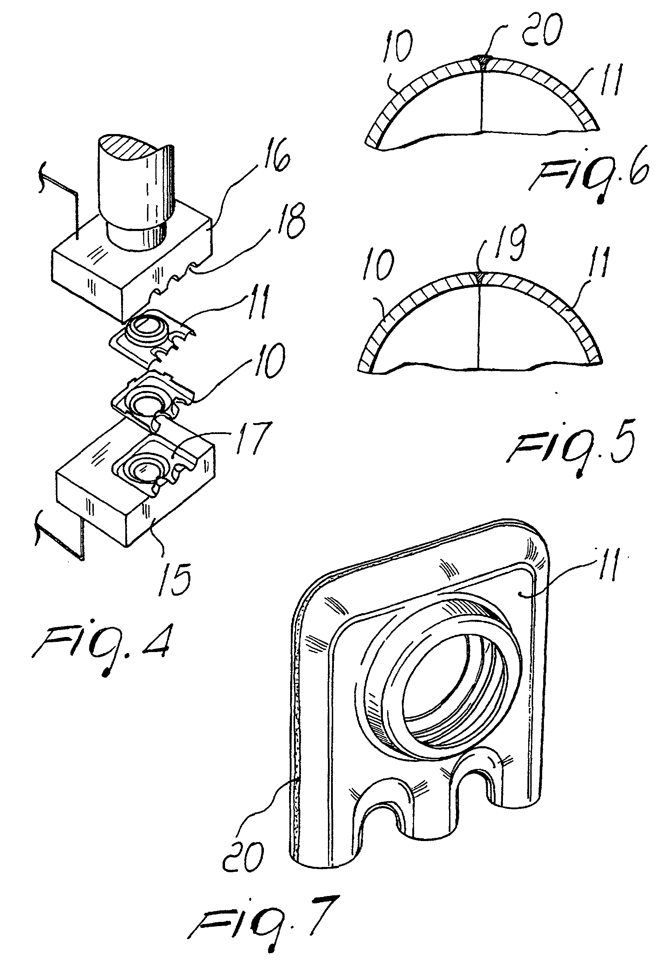

The two half-shells 10 and 11 are placed between two electrodes 15 and 16 (see Figure 4) which are constituted in practice by two metal blocks, between which respective seats 17 and 18 for the half-shells 10 and 11 are hollowed out.

The seats 17 and 18 must be deep enough so that by interposing the half-shells 10 and 11 between the electrodes 15 and 16 and closing, contact occurs only between the raised portions 14 of the edge 12 and the corresponding regions of the edge 13; no contact must occur between the electrodes.

Then the two electrodes 15 and 16 are connected to a capacitor discharge source, not shown for the sake of simplicity, and the discharge is released.

The regions in mutual contact between the half-shells 10 and 11 heat up, melt locally and a weld 19 forms between the two half-shells 10 and 11 only in portions which are sufficient for them to remain coupled for the subsequent steps.

A braze welding paste is then spread on the outer part of the joining region between the edges 12 and 13; said paste is preferably constituted by a strong braze welding alloy based on steel with electrolytic copper, and the head is passed in an oven at a temperature of approximately 1000-1100 °C in order to achieve the actual weld 20 that joins and seals the two half-shells 10 and 11 one another.

The braze welding closes all the fine cracks that are present along the part of the edges that has not yet been joined, thus ensuring perfect watertightness.

Accordingly, the capacitor-discharge weld 19 is provided simply in spots and in order to keep the two half-shells 10 and 11 joined for the subsequent actual weld in the oven, which is a braze weld 20.

In practice it has been observed that the intended aim and objects of the present invention have been achieved.

The power required for the capacitor discharge is in fact distinctly lower than the current ones, since it is directly proportional to the limited overall area of contact between the two half-shells 10 and 11.

Accordingly, there is no more danger of having high consumption peaks during welding and of paying the corresponding penalties prescribed by usual energy supply contracts.

From the qualitative point of view, the product is perfectly welded along the entire perimeter in a watertight manner and the differences between the braze-welded portions and the capacitor-discharge welded portions are practically not detectable and in any case invisible after usual painting.

Furthermore, no further machining on machine tools to eliminate burr or welding beads is necessary.

In practice, the different operating steps can be changed with other technically equivalent ones.

The materials employed, so long as they are compatible with the contingent use, as well as the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing heads of pressed metal plate radiator elements in which each head is formed by two complementary half-shells (10, 11) to be joined at their respective edges, **characterized in that** it comprises the steps of:
shaping said half-shells (10, 11) so that at least one of them has a plurality of tooth-like raised portions (14) on its joining edge;
arranging said half-shells so that they are mated at said edges;
welding said half-shells with a capacitor discharge, achieving a joint only at said raised portions;
welding the remaining parts of said mutually facing edges (12, 13) of said half-shells (10, 11) by braze welding.

2. The method according to claim 1, **characterized in that** said braze welding consists in:
applying a paste to the outside of said half-shells in regions where the edges to be welded join;
passing said half-shells through an oven.

3. The method according to claim 1, **characterized in that** said raised portions are sufficient in number in order to provide stable resting in a parallel arrangement between said edges of said half-shells.

4. The method according to claim 1, **characterized in that** said raised portions have a height which is substantially equal to a few tenths of a millimeter.

5. The method according to claim 1, **characterized in that** each one of said raised portions has a length of approximately 10 millimeters.

6. A head for a pressed metal plate radiator element obtained with the method according to claim 1, **characterized in that** it is constituted by two complementary half-shells (10, 11) which are joined at the respective edges (12, 13) with braze welded portions alternated with portions welded by capacitor discharge.

## Patentansprüche

1. Verfahren zum Herstellen von Köpfen von gepressten, metallischen Plattenheizelementen, in denen jeder Kopf durch zwei komplementäre Halbschalen (10, 11) gebildet ist, die an ihren jeweiligen Kanten verbunden werden, **dadurch gekennzeichnet, dass** es die folgenden Schritte umfasst:
Formen der Halbschalen (10, 11) derart, dass zumindest eine von ihnen mehrere zahnähnliche, erhabene Abschnitte (14) an ihrer Verbindungskante hat;
Anordnen der Halbschalen derart, dass sie an den Kanten zusammenpassen;
Schweißen der Halbschalen mit einer Kondensatorentladung, wobei eine Verbindung lediglich an den erhabenen Abschnitten geschaffen wird,
Schweißen der übrigen Teile der sich einander gegenüberliegenden Kanten (12, 13) der Halbschalen (10, 11) durch Lötschweißen.

2. Verfahren nach Anspruch 1, **dadurch gekennzeichnet, dass** das Lötschweißen besteht aus:
Aufbringen einer Paste an die Außenseite der Halbschalen in Bereichen, an denen sich die zu schweißenden Kanten sich verbinden;
Führen der Halbschalen durch einen Ofen.

3. Verfahren nach Anspruch 1, **dadurch gekennzeichnet, dass** die Anzahl der erhöhten Abschnitte ausreicht, um für ein stabiles Anliegen in einer parallelen Anordnung zwischen den Kanten der Halbschalen zu sorgen.

4. Verfahren nach Anspruch 1, **dadurch gekennzeichnet, dass** die erhabenen Abschnitte ein Gewicht haben, das im Wesentlichen einigen Zehnteln eines Millimeters entspricht.

5. Verfahren nach Anspruch 1, **dadurch gekennzeichnet, dass** jeder der erhabenen Abschnitte eine Länge von ungefähr 10 Millimetern hat.

6. Kopf für ein gepresstes, metallisches Plattenheizelement, den man durch das Verfahren nach Anspruch 1 erhält, **dadurch gekennzeichnet, dass** er aus zwei komplementären Halbschalen (10, 11) besteht, die an jeweiligen Kanten (12, 13) verbunden sind, wobei sich Lötschweißabschnitte mit durch Kondensatorentladung geschweißten Abschnitten abwechseln.

## Revendications

1. Une méthode pour manufacturer les parties de tête d'éléments de radiateurs en plaque de métal moulé selon laquelle chaque partie de tête est formée par deux semi-parois complémentaires (10,11) à joindre en correspondance de leurs bords respectifs, **caractérisée en ce que** qu'elle comprend les phases de:
conformer lesdites semi-parois (10,11) de façon qu'au moins l'une d'elles comporte une pluralité de portions en saillie (14) en forme de dents en correspondance des bords de jonction;
disposer lesdites semi-parois de façon qu'elles soient assemblées en correspondance desdits bords;
souder lesdites semi-parois par une décharge capacitive, de façon qu'un assemblage ait lieu seulement en correspondance desdites portions en saillie;
souder les parties restantes des bords (12,13) qui se font mutuellement face desdites semi-parois (10,11) par soudure au laiton.

2. La méthode selon la revendication 1, **caractérisée en ce que** la dite soudure au laiton consiste dans:
l'application d'une pâte à la partie extérieure desdites semi-parois en correspondance de zones où les bords à souder sont joints;
le passage desdites semi-parois à travers un four.

3. La méthode selon la revendication 1, **caractérisée en ce que** lesdites portions en saillie sont en nombre suffisant pour donner lieu à un appui stable selon un arrangement en parallèle entre lesdits bords desdites semi-parois.

4. La méthode selon la revendication 1, **caractérisée en ce que** lesdites portions en saillie ont une hauteur qui est essentiellement égale à quelques dixièmes de millimètre.

5. La méthode d'après la revendication 1, **caractérisée en ce que** chacune des dites portions en saillie a une longueur d'approximativement 10 millimètres.

6. Une partie de tête pour un élément de radiateur en plaque de métal moulé obtenu selon la méthode d'après la revendication 1, **caractérisée en ce qu'**elle est constituée par deux semi-parois complémentaires (10, 11) qui sont jointes en correspondance de leurs bords respectifs (12,13) avec des portions soudées au laiton alternées avec des portions soudées par des décharges capacitives.
